# EUROPÄISCHE PATENTSCHRIFT

(11) **EP 3 146 181 B1**
(45) Veröffentlichungstag und Bekanntmachung des Hinweises auf die Patenterteilung: **02.01.2019**
(21) Anmeldenummer: 15753663.2
(22) Anmeldetag: 13.08.2015
(51) Int. Cl.: F02C 3/22, F02C 7/224, F02C 7/232, F02C 9/46, F25J 1/00, F25J 1/02, F23R 3/36, F01D 15/10

(54) **BETRIEBSVERFAHREN FÜR EINE KRAFTWERKSANLAGE MIT NOTBRENNSTOFFSYSTEM**
OPERATING METHOD FOR A POWER PLANT WITH EMERGENCY FUEL SYSTEM
PROCÉDÉ D'EXPLOITATION POUR UNE CENTRALE ÉLECTRIQUE ÉQUIPÉE D'UN SYSTÈME DE CARBURANT D'URGENCE

(30) Priorität: 13.08.2014 DE 102014216014
(43) Veröffentlichungstag der Anmeldung: 29.03.2017
(73) Patentinhaber: Siemens Aktiengesellschaft, 80333 München (DE)
(72) Erfinder: NIXDORF, Manfred, 67112 Mutterstadt (DE); PERSICKE, Karl-Heinz, 61138 Niederdorfelden (DE); THIELE, Wilhelm, 91054 Buckenhof (DE)
(86) Internationale Anmeldenummer: PCT/EP2015/068670
(87) Internationale Veröffentlichungsnummer: WO 2016/023987

(56) Entgegenhaltungen:
- EP-A2- 1 519 115
- EP-A2- 1 655 456
- EP-B1- 0 828 925
- WO-A1-2013/135691

## Beschreibung

Die Erfindung betrifft ein Verfahren zum Betrieb einer Kraftwerksanlage, ein Verfahren zum Nachrüsten eines Notbrennstoffsystems in eine bestehende Kraftwerksanlage, sowie eine Kraftwerksanlage mit Notbrennstoffsystem.
Um den Betrieb von Kraftwerksanlagen auch bei Ausfall des Primärbrennstoffs sicher zu stellen, werden Zweitbrennstoffe als Notbrennstoff in der Nähe der Kraftwerksanlage bevorratet, um im Bedarfsfall, beispielsweise in einem Notbetriebszustand, die Kraftwerksanalage weiter betreiben zu können. Je nach Auslegung der Kraftwerksanlage und Anforderungen aus dem Stromnetz kann es erforderlich sein, dass die Kraftwerksanlage zwischen 7 und 14 Tagen im Notbetriebszustand mit einem Zweitbrennstoff betrieben werden können muss.
Bei kombinierten Gas- und Dampfkraftwerksanlagen (GUD) wird Gas, insbesondere Erdgas, welches über eine Versorgungsleitung wie beispielsweise Pipelines zum Kraftwerk geleitet wird, als Primärbrennstoff eingesetzt. Als Zweitbrennstoff wird in der Regel Öl (Diesel) verwendet, welches in Tanks auf dem Gelände der Kraftwerksanlage gelagert wird. Kommt es zu einem Ausfall der Gasversorgung über die Versorgungsleitung kann auf Öl als Zweitbrennstoff umgeschaltet werden. Um Öl in ausreichenden Mengen speichern zu können, ist der Zugang zu einer Versorgungslogistik notwendig.

EP1519115 A2 zeigt ein Verfahren zum Betrieb einer Kraftwerksanlage und WO2013/135691 A1 zeigt ein System zur gleichzeitigen Erhitzung von Flüssigerdgas und zur Gasturbinenzwischenkühlung. Um Öl in der Gasturbine verbrennen zu können, sind in der Gasturbine zusätzliche Brenner erforderlich, was die Entwicklung einer solchen Gasturbine aufwendiger gestaltet. Ebenso sind an der Gasturbine zusätzliche Hilfssysteme, wie Pumpen und Mess- und Regelsysteme erforderlich. Auch sind große Tanks auf dem Gelände der Kraftwerksanlage notwendig.

Öl als Zweitbrennstoff neben Gas als Primärbrennstoff, hat eine Reihe an Nachteilen. Insbesondere hat Öl einen geringeren Wirkungsgrad gegenüber Gas bei der Verbrennung in der Gasturbine, da mit Öl geringere Flammtemperaturen erzielbar sind. Dies führt zu einer erheblichen Leistungsreduzierung während der Befeuerung mit Öl. Daher muss eine solche Kraftwerksanlage größer ausgelegt werden, um auch im Notbetrieb volle Nennleistung erzielen zu können.

Die Betriebsstabilität bei der Verwendung von Öl als Brennstoff ist auch geringer als bei Gas. Auch wenn durch die Befeuerung mit Öl die Leistung geringer ist, steigen die Emissionen bei der Befeuerung mit Öl. Dies macht je nach lokalen Umweltauflagen einen zusätzlichen Katalysator erforderlich. Mit Öl als Zweitbrennstoff steigt somit auch der behördliche Genehmigungsaufwand.

Eines der problematischsten Nachteile im Betrieb ist allerdings, dass für die Umstellung von Gas auf Öl eine relativ lange Umrüstzeit erforderlich ist. Dadurch eignet sich Öl als Notbrennstoff insbesondere nur für geplante Ausfälle. Bei plötzlichen Ausfällen müsste die Kraftwerksanlage je nach Gasturbinentyp herunter gefahren werden.

Es ist Aufgabe der Erfindung, die Nachteile aus dem Stand der Technik zu beseitigen. Dabei soll eine aufwendige Erweiterung der Gasturbine für einen Zweitbrennstoff entfallen, keine Leistungseinbußen im Notbrennstoffbetrieb entstehen, und die Kraftwerksanlage auch bei plötzlichen Ausfällen des Primärbrennstoffs Gas auch ohne Unterbrechung weiter betrieben werden können. Dazu ist es Aufgabe der Erfindung ein Verfahren zum Betrieb einer Kraftwerksanlage mit Notbrennstoffsystem anzugeben, eine Kraftwerksanlage mit Notbrennstoffsystem, sowie ein Verfahren zum Nachrüsten eines Notbrennstoffsystems in eine bestehende Kraftwerksanlage.

Die auf ein Verfahren zum Betrieb einer Kraftwerksanlage mit Notbrennstoffsystem gerichtete Aufgabe der Erfindung wird gelöst durch die Merkmale des Anspruchs 1, wobei die Kraftwerksanlage eine Gasturbine und ein Notbrennstoffsystem umfasst, und in einem Normalbetriebszustand und in einem Sonderbetriebszustand betrieben werden kann. In dem Normalbetriebszustand wird Gas aus einer Versorgungsleitung dem Verbrennungsprozess der Gasturbine zugeführt, und zudem Gas aus der Versorgungsleitung einer Gasverflüssigungsanlage zugeführt und darin verflüssigt, wobei ein flüssiges Gas (LNG) gebildet wird, welches in einem Flüssiggasspeicher gespeichert wird. In dem Sonderbetriebszustand, wird verflüssigtes Gas (LNG) aus dem Flüssiggasspeicher entnommen und in einem Verdampfer verdampft, und in gasförmigen Zustand in dem Verbrennungsprozess der Gasturbine zugeführt.

Der Normalbetriebszustand wird die Kraftwerksanlage mit Gas, wie beispielsweise Erdgas, über eine Versorgungsleitung, wie beispielsweise eine Pipeline, von außen mit Gas versorgt und zur Strom- und/oder Fernwärmeerzeugung betrieben. Ein Teil des Gases aus der Versorgungsleitung wird im Normalbetriebszustand auch einer Gasverflüssigungsanlage (Liquefier) zugeführt, wo es mit Hilfe der Kompressionsenergie aus der Versorgungsleitung mittels integrierter Kälteturbine verflüssigt wird. Die Gasverflüssigungsanlage besteht aus einer Verdichterstation sowie aus "Liquifier-Cyro"-Apparaten, die miteinander derart verschaltet sind, dass das Gas in mehreren Stufen verdichtet und gekühlt wird. Das verflüssigte Gas, welches auch als Liquified Natural Gas (LNG) bezeichnet wird, wird in einem Flüssiggasspeicher gespeichert. Die Speicherung kann kryogen unter Atmosphärendruck oder unter Druck erfolgen.

Der Sonderbetriebszustand ist ein geplanter oder plötzlicher Ausfall der Gasversorgung aus der Versorgungsleitung, bei dem kein, nicht ausreichend Gas, oder nur in schwankenden Massenströmen für die Gasturbine aus der Versorgungsleitung zur Verfügung steht. Auch starke Schwankungen in der Qualität des Gases aus der Versorgungsleitung können den Sonderbetriebszustand definieren. In diesen Fällen wird verflüssigtes Gas aus dem Flüssiggasspeicher entnommen, und einem Verdampfer zugeführt. In dem Verdampfer wird das verflüssige Gas wieder in die Gasphase überführt. Wenn die Speicherung des verflüssigten Gases (LNG) atmosphärisch gespeichert wird, muss das Gas wieder auf den für die Gasturbine erforderlichen Druck gebracht werden. Dazu ist eine zusätzliche Pumpe erforderlich.

Die Erfindung geht einerseits von der Überlegung aus, dass auf einen Zweitbrennstoff als Notbrennstoff verzichtet wird, indem der Hauptbrennstoff gespeichert wird. Der Notbrennstoff entspricht dem Primärbrennstoff. Andererseits wird der Notbrennstoff als verflüssigtes Gas (LNG) gespeichert, welches im Normalbetrieb erzeugt wird. Damit stellt das Notbrennstoffsystem einen Energiespeicher dar, der eine Entkopplung von Gasbezug und Stromerzeugungsbedarf ermöglicht.

Da im Sonderbetriebszustand als Notbrennstoff das gleiche Gas verwendet wird, wie im Normalbetriebszustand, entstehen im Sonderbetriebszustand keine Leistungseinbußen. Im Gegenteil, es ist sogar eine Leistungserhöhung erzielbar. Das verflüssigte Gas (LNG) ist höherwertiger als das Gas aus der Versorgungsleitung, da Inertgasanteile wie Stickstoff oder Kohlendioxid und Schmutzstoffe bei der Flüssiggaserzeugung entfernt werden. Kommt es zu Schwankungen der Zusammensetzung oder der Qualität des Gases aus der Versorgungsleitung, kann auf den Sonderbetriebszustand umgestellt werden, und die Gasturbine mit hochwertigem verflüssigten Gases (LNG) weiter betrieben werden. Dadurch wird die Betriebssicherheit der Kraftwerksanlage erhöht. Zudem ermöglicht es die Erfindung der Kraftwerksanlage, durch den höherwertigen Brennstoff in einem höheren Regelbereich ihre Leistung zu Regeln.

Durch die Erfindung brauchen in der Gasturbine keine teuren Zweitbrennstoffbrenner installiert werden. Die Hauptbrenner können auch für den Notbrennstoff benutzt werden, da dieser auch Gas ist. Die betriebstechnische, genehmigungsrechtliche und logistische Handhabung des Notbrennstoffs entfällt, da mit dem Hauptbrennstoff Reserven gebildet werden können. Durch die Möglichkeit Hauptbrennstoff zu speichern, kann der Kraftwerksbetreiber bessere Kostenpositionen beim Einkauf des Gases erzielen, da der Gaslieferant keine Versorgungsausfälle garantieren muss.
Die Kraftwerksanalage kann auch bei plötzlichen Ausfällen des Primärbrennstoffs aus der Versorgungsleitung ohne Unterbrechung weiter betrieben werden, da das gespeicherte verflüssigte Gas ja systemtechnisch im Gasversorgungssystem der Gesamtanlage integriert ist, und ein Umstellen der Gasturbine von Hauptbrennstoff auf Notbrennstoff somit ohne Probleme im laufenden Betrieb möglich ist. Durch die Erfindung ist somit die Verfügbarkeit einer Kraftwerksanlage im Sonderbetrieb mit Notbrennstoff nicht mehr direkt mit der Verfügbarkeit des Gasversorgungssystems gekoppelt und konnte erheblich gesteigert werden.

Im Sonderbetriebszustand wird verdampftes Gas aus dem Speicher zurück in die Versorgungsleitung gespeist. Dadurch kann der Kraftwerksbetreiber dazu beitragen, entweder Druckschwankungen in der Versorgungsleitung auszugleichen, oder bei einem kompletten Versorgungsausfall andere angeschlossene Verbraucher, die ebenfalls von dem Versorgungsausfall betroffen sind, mit Gas zu versorgen. Dies ermöglicht dem Kraftwerksbetreiber zusätzliche Einnahmen.
Da die Gasverflüssigungsanlage verhältnismäßig klein ausfallen kann, können die Verdichter und Kühler mit elektrischem Strom betrieben werden, der in der Kraftwerksanlage erzeugt wird. Die erfindungsgemäße Kraftwerksanlage grenzt sich dadurch von reinen LNG Anlagen mit angeschlossenem Kraftwerk ab, da bei diesen die Gasverflüssigungsanlage mit zusätzlichen Gasturbinen angetrieben werden. Bei der Erfindung ist die Gasverflüssigungsanlage vorzugsweise so dimensioniert, dass weniger als 5% der elektrischen Leistung der Kraftwerksanlage zur Verflüssigung des Gases genutzt wird. Die erfindungsgemäße Gasverflüssigungsanlage ist so ausgelegt, dass sie bezogen auf den Gesamtgasverbrauch der Gasturbine nur einen kleinen Teil abzieht und verflüssigt. Dieser kleine Teil entspricht üblicherweise weniger als 5% und hängt im Wesentlichen von den erforderlichen Betriebszeiten im Reservebetrieb und der Gasqualität ab.

Bei einer weiteren vorteilhaften Weiterentwicklung der Erfindung wird im Normalbetriebszustand die Gasverflüssigungsanlage dazu genutzt, um durch gezieltes zu- oder abschalten der Gasverflüssigungsanlage eine Leistungsregelung der Kraftwerksanlage zu nutzen. Die Leistungsregelung kann dabei unter Umständen auch zur Frequenzregelung oder Frequenzstütze genutzt werden. Die Gasverflüssigungsanlage entspricht einem Verbraucher, der nur im Normalbetriebszustand läuft, und problemlos abgeschaltet werden kann. Durch ein gezieltes Abschalten kann somit die Leistung, welche die Gasverflüssigungsanlage verbraucht, ins Stromnetz eingespeist werden und somit zur Leistungsregelung des Kraftwerks beitragen.

Bei einer besonderen Ausgestaltung der Erfindung wird im Sonderbetriebszustand die bei Verdampfung im Verdampfer freiwerdende Kälteenergie zur Kühlung der Ansaugluft der Gasturbine verwendet, indem das verdampfte Gas mit der Ansaugluft im Wärmetausch geführt wird. Die Kälteenergie des wiederverdampfenden Gases kann dabei direkt, oder mittels eines Wärmeübertragungsmediums an die Ansaugluft der Gasturbine übertragen wird. Durch Wiederverdampfung des kryogen gespeicherten Brennstoffes und Nutzung der dabei frei werdenden Kälteenergie kann somit die Leistung der Gasturbine im Spitzenlastbetrieb weiter gesteigert werden. Je nach Auslegung der Kraftwerksanlage und Umgebungsbedingungen ist eine Steigerung der Blockleistung je nach Anlagentyp und Vorkühlverfahren um zwischen 5 und 10% möglich. Die Kühlung der Ansaugluft kann auch geregelt erfolgen, sodass im Sonderbetriebszustand mit Notbrennstoff die Betriebsflexibilität der Kraftwerksanlage gesteigert werden kann.

In einem beispielhaften, nicht beanspruchten Verfahren werden in eine bestehende Kraftwerksanlage, die eine Gasturbine umfasst, eine Gasverflüssigungsanlage, ein Flüssiggasspeicher und ein Verdampfer nachgerüstet. Die Gasverflüssigungsanlage wird gaszuführend an eine Versorgungsleitung (Pipeline) angeschlossen, und zur Ausleitung von verflüssigtem Gas (LNG) an den Flüssiggasspeicher angeschlossen. Der Flüssiggasspeicher wird zur Ausleitung von verflüssigtem Gas (LNG) an den Verdampfer angeschlossen, und der Verdampfer zur Ausleitung von verdampftem Gas an die Gaszuführleitung des Verbrennungsprozesses der Gasturbine.
Dadurch ist im Fall der Nachrüstung einer Kraftwerksanlage mit einem Notbrennstoffsystem bei den Umweltbehörden kein zusätzliches EIA (Environmental Impact Assessment) und keine neue Genehmigung für einen neuen Brennstoff notwendig, was erheblich das Risiko einer geplanten Nachrüstung minimiert. Es findet kein Brennstoffwechsel statt.

Eine beispielhafte, nicht beanspruchte Kraftwerksanlage umfasst eine Gasturbine, eine Gasverflüssigungsanlage, einen Flüssiggasspeicher zur Speicherung von flüssigem Gas (LNG), und einem Verdampfer, Die Gasturbine und die Gasverflüssigungsanlage sind an eine Versorgungsleitung angeschlossen. Das in der Gasverflüssigungsanlage erzeugbare verflüssigte Gas ist dem Flüssiggasspeicher zuführbar. Das im Flüssiggasspeicher gespeicherte flüssige Gas ist dem Verdampfer zuführbar. Erfindungsgemäß ist der Gasturbine wahlweise verdampftes Gas aus dem Verdampfer oder Gas aus der Versorgungsleitung zuführbar ist.
Dadurch kann der Gasturbine im Normalbetriebszustand Gas aus der Versorgungsleitung zugeführt werden, und im Sonderbetriebszustand, bei Ausfall der Versorgungsleitung, Gas aus dem Verdampfer. Die erfindungsgemäßen Vorteile ergeben sich analog zu dem Verfahren zum Betrieb einer Kraftwerksanlage mit Notbrennstoffsystem aus Anspruch 1.

Bei einer Weiterentwicklung der Erfindung ist der Verdampfer an die Versorgungsleitung angeschlossen, sodass verflüssigtes Gas nach der Wiederverdampfung in die Versorgungsleitung leitbar ist. Dadurch kann die Kraftwerksanlage Gas zurück in die Versorgungsleitung speisen.

Bei einer weiteren vorteilhaften Ausgestaltung der Erfindung umfasst die Kraftwerksanlage weiterhin einen elektrischen Antrieb, der die Gasverflüssigungsanlage antreibt. Die Leistungsaufnahme des elektrischen Antriebs ist dabei weniger als 5% der elektrischen Leistung der Kraftwerksanlage. Alternativ dazu kann die Gasverflüssigungsanlage auch durch die vorhandene oder eine zusätzliche Gasturbine angetrieben werden, was im Vergleich zu einem elektrischen Antrieb je nach Ausgestaltung der Kraftwerksanlage Kosten- und Verfügbarkeitsvorteile hat.

Bei einer besonderen Weiterentwicklung der Kraftwerksanlage ist weiterhin eine Regelvorrichtung umfasst, welche die Gasverflüssigungsanlage gezielt zu- oder abschaltet. Die Regelung geschieht dabei in Abhängigkeit von einer von der Kraftwerksanlage geforderten Leitung. Dadurch ist eine Leistungsregelung der Kraftwerksanlage, insbesondere zur Frequenzregelung oder Frequenzstütze erzielbar.

In einer weiteren besonderen Ausgestaltung der Erfindung umfasst die Kraftwerksanlage weiterhin einen Verdichtereinheit, welche die Wiederverdampfungsenthalpie der Umgebungsluft der Gassturbine entzieht. Durch einen Wärmetauscher, der mit seiner Sekundärseite zuführend an den Verdampfer angeschlossen ist, und mit seiner Primärseite zuführend an die Ansaugluftzuführung der Gasturbine angeschlossen ist. Dadurch kann die Kälteenergie des flüssigen Gases (LNG) bei Verdampfung zur Kühlung der Ansaugluft der Gasturbine genutzt werden. Die Sekundärseite ist die Seite, auf die Wärme von der Primärseite übertragen wird.

Die Erfindung kann vorteilhaft bei Gas- und Dampfturbinenkraftwerken, Gasturbinenkraftwerken oder Heizkraftwerken angewandt werden.

Ausführungsbeispiele der Erfindung werden nachfolgend anhand von Figuren beschrieben. Darin zeigt
- FIG 1: Ein Verfahren zum Betrieb einer Kraftwerksanlage im Normalbetriebszustand
- FIG 2: Ein Verfahren zum Betrieb einer Kraftwerksanlage im Sonderbetriebszustand
- FIG 3: Eine besondere Weiterentwicklung des Verfahrens zum Betrieb einer Kraftwerksanlage im Sonderbetriebszustand
- FIG 4: Ein Verfahren, wie eine bestehende Kraftwerksanlage mit einem Notbrennstoffsystem erweitert werden kann

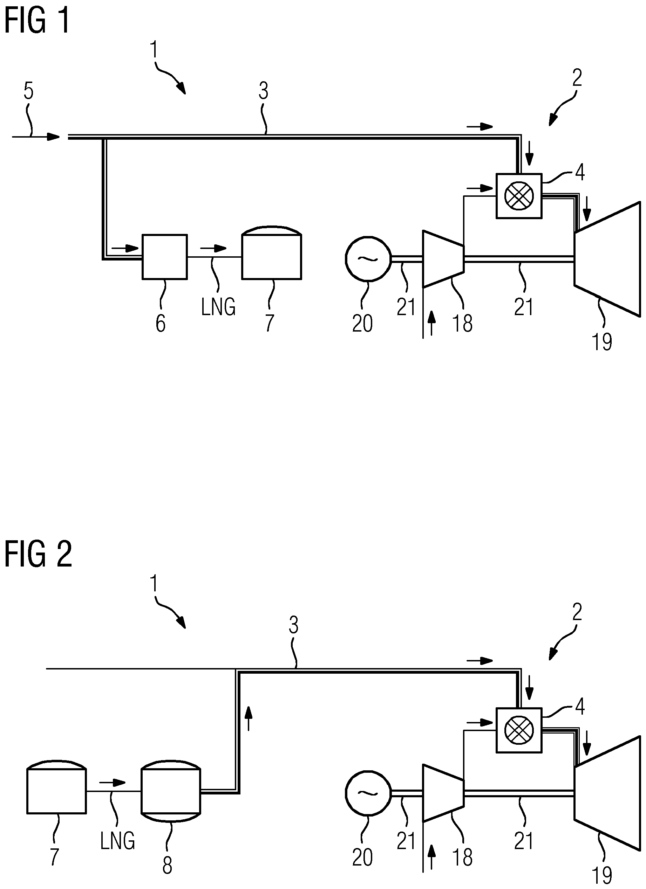

FIG 1 zeigt ein Verfahren zum Betrieb einer Kraftwerksanlage 1 im Normalbetriebszustand. In diesem Normalbetriebszustand wird ein Gas 5 aus einer Versorgungsleitung 3 einem Verbrennungsprozess 4 einer Gasturbine 2 zugeführt. Die Gasturbine besteht aus einer Verdichtereinheit 18, dem Verbrennungsprozess 4, und einer Expansionseinheit 19. Dem Verbrennungsprozess 4 wird Gas 5 aus der Versorgungsleitung 3 zugeführt.

Neben dem Verbrennungsprozess 4 wird auch Gas 5 aus der Versorgungsleitung 3 einer Gasverflüssigungsanlage 6 zugeführt. In der Gasverflüssigungsanlage 6 wird das Gas 5 verflüssigt, wobei ein flüssiges Gas (LNG) gebildet wird. Das flüssige Gas (LNG) wird in einem Flüssiggasspeicher 7 gespeichert. Der Flüssiggasspeicher entspricht einem Tank der so ausgelegt ist, dass in ihm das verflüssigte Gas (LNG) kryogen gespeichert werden kann. In dem vorliegenden Ausführungsbeispiel hat der Tank ein Speichervolumen von 30T m³.

Damit wäre im Sonderbetriebszustand ein Betrieb der Gasturbine 2 auch bei Ausfall der Versorgungsleitung 3 von bis zu 14 Tagen möglich. Im vorliegenden Beispiel hat die Gasverflüssigungsanlage 6 ein Durchsatzvolumen von 1,7 kg/s. Damit ist sie in der Lage den Flüssiggasspeicher 7 innerhalb eines Jahres im Normalbetriebszustand der Kraftwerksanlage 1 voll aufzufüllen.

FIG 2 zeigt ein Verfahren zum Betrieb einer Kraftwerksanlage 1 im Sonderbetriebszustand, in dem kein Gas 5 aus der Versorgungsleitung 3 zur Verfügung steht. Um den Verbrennungsprozess 4 der Gasturbine 2 weiter mit Gas versorgen zu können, wird verflüssigtes Gas (LNG) aus dem Flüssiggasspeicher 7 entnommen, und einem Verdampfer 8 zugeführt. In dem Verdampfer 8 wird das verflüssigte Gas (LNG) verdampft und im dampfförmigen Zustand dem Verbrennungsprozess 4 der Gasturbine 2 zugeführt.

In dem Beispiel der Fig. 2 ist der Flüssiggasspeicher 7 ein Druckspeicher. Der Druck, bei dem das verflüssigte Gas (LNG) gespeichert wird ist dabei so eingestellt, dass der Druck des nach Gases nach verdampfen in dem Verdampfer 8 so hoch ist, dass er dem erforderlichen Druck für die Gasturbine 2 entspricht.

Nin Fig. nicht dargestellt ist eine alternative Variante, bei der ein Flüssiggasspeicher 7 verwendet wird, in dem das verflüssigte Gas (LNG) unter Atmosphärendruck gespeichert wird. In diesem Fall ist es erforderlich, den Druck des Gases vor der Zuführung in den Verbrennungsprozess 4 der Gasturbine 2 zu erhöhen. Dies wird durch eine Pumpe erzielt, die zwischen Flüssiggasspeicher 7 und Verdampfer 8 angeordnet wird.

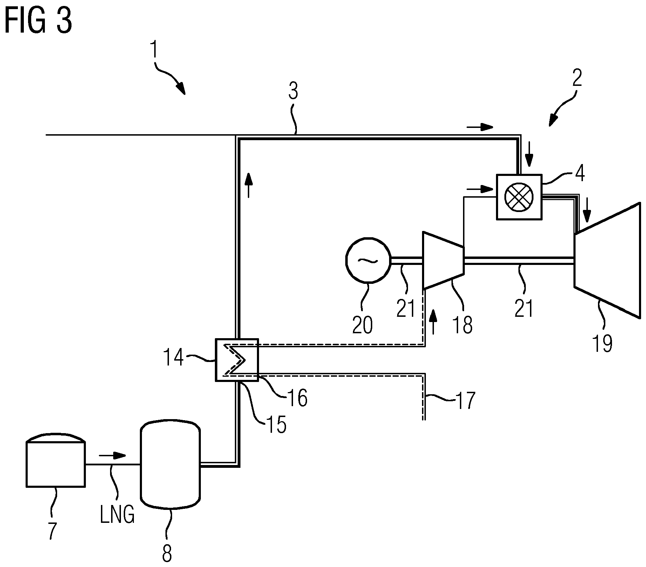

FIG 3 zeigt eine besondere Weiterentwicklung des Verfahrens zum Betrieb einer Kraftwerksanlage im Sonderbetriebszustand. In dem Ausführungsbeispiel der FIG 3 ist weiterhin ein Wärmetauscher 14 vorgesehen, der eine Primärseite 16 und eine Sekundärseite 15 aufweist. Die Primärseite 16 ist die Wärme abgebende Seite und die Sekundärseite 15 ist die Wärme aufnehmende Seite. Der Wärmetauscher 14 ist mit seiner Sekundärseite 15 zuführend an den Verdampfer 8 angeschlossen. Sekundärseitig abführend ist der Wärmetauscher mit der Versorgungsleitung 3 verbunden, über die das Gas dem Verbrennungsprozess 4 der Gasturbine 2 zuführbar ist. Der Wärmetauscher 14 ist primärseitig 16 in die Ansaugluftleitung 17 geschaltet. Dadurch kann Kälteenergie die bei der Verdampfung von flüssigem Gas im Verdampfer 8 frei wird, zur Kühlung der Ansaugluft der Gasturbine 2 verwendet werden.

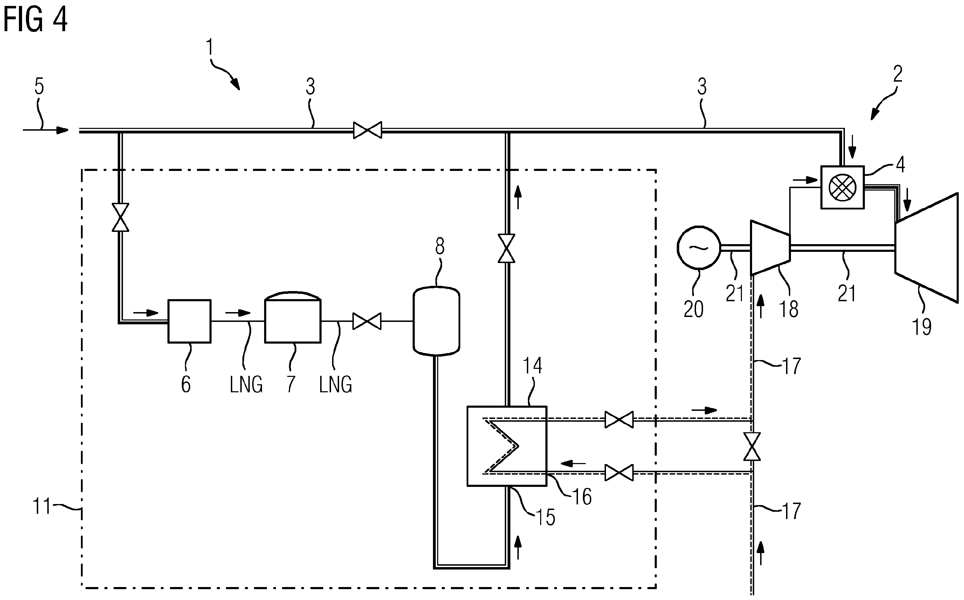

FIG 4 zeigt einerseits ein beispielhaftes, nicht beanspruchtes Verfahren, wie eine bestehende Kraftwerksanlage 1 mit einem Notbrennstoffsystem 11 erweitert werden kann, weiterhin zeigt es eine Kraftwerksanlage 1, die mit einem Notbrennstoffsystem 11 ausgerüstet ist. Das Notbrennstoffsystem 11 umfasst eine Gasverflüssigungsanlage 6, einen Flüssiggasspeicher 7, einen Verdampfer 8, und einen Wärmetauscher 14. Das Notbrennstoffsystem 11 wird in einer Kraftwerksanlage integriert, die eine Gasturbine 2 aufweist.
Die Gasverflüssigungsanlage 6 wird zuführend mit der Versorgungsleitung 3 verbunden, wobei in die Verbindungsleitung ein Regelventil integriert werden kann, um den Anteil des Gases für die Gasverflüssigungsanlage 6 zu regeln. Die Gasverflüssigungsanlage 6 wird mit dem Flüssiggasspeicher 7 über eine Leitung für flüssiges Gas verbunden. Der Flüssiggasspeicher 7 wird über eine Verbindungsleitung für flüssiges Gas mit dem Verdampfer 8 verbunden, wobei in die Verbindungsleitung ein Regelventil geschaltet wird. Der hier dargestellt Flüssiggasspeicher 7 ist ein Druckspeicher, weshalb keine nachträglich Druckerhöhung des rückverdamften Gases erforderlich ist.
Nicht dargestellt ist eine alternative Variante des Flüssiggasspeichers 7, der bei atmosphärischem Druck betrieben wird, und bei dem eine zusätzliche Pumpe vorgesehen werden muss, um das verflüssigte Gas wieder auf Druckniveau der Gasversorgungsleitung zu bringen. Die Pumpe wird dabei vorzugsweise zwischen dem Flüssiggasspeicher 7 und dem Verdampfer 8 vorgesehen.

Der Verdampfer 8 wird ausleitend mit der Sekundärseite 15 des Wärmetauschers 14 zuleitend verbunden. Die Sekundärseite des Wärmetauschers 14 ist ableitend verbunden mit der Versorgungsleitung 3, wobei in diese Verbindungsleitung ein Regelventil geschaltet wird. Der Wärmetauscher 14 ist primärseitig in die Ansaugluftleitung 17 der Verdichtereinheit 18 der Gasturbine geschaltet, wobei die zuführende und abführende Leitung zum Wärmetauscher jeweils mit Regelventilen ausgestattet sind.

Eine Kraftwerksanlage 1, die nach diesem Verfahren mit einem Notbrennstoffsystem 11 nachgerüstet oder ausgestattet ist hat die Möglichkeit, die Gasturbine 2 wahlweise mit Gas aus der Versorgungsleitung 3 oder mit verdampftem Gas aus dem Notbrennstoffsystem zu betreiben.

## Patentansprüche

1. Verfahren zum Betrieb einer Kraftwerksanlage (1), umfassend eine Gasturbine (2) und ein Notbrennstoffsystem (11), wobei
- in einem Normalbetriebszustand Gas (5) aus einer Versorgungsleitung (3) dem Verbrennungsprozess (4) der Gasturbine (2) zugeführt wird, und zudem Gas (5) aus der Versorgungsleitung (3) einer Gasverflüssigungsanlage (6) zugeführt und darin verflüssigt wird, wobei ein flüssiges Gas (LNG) gebildet wird, welches in einem Flüssiggasspeicher (7) gespeichert wird, und
- in einem Sonderbetriebszustand, verflüssigtes Gas (LNG) aus dem Flüssiggasspeicher (7) entnommen, und in einem Verdampfer (8) verdampft wird, und in gasförmigen Zustand in dem Verbrennungsprozess (4) der Gasturbine (2) zugeführt wird,
**dadurch gekennzeichnet, dass**
im Sonderbetriebszustand verdampftes Gas aus dem Flüssiggasspeicher (7) zurück in die Versorgungsleitung (3) zugeführt wird, um Druckschwankungen in der Versorgungsleitung auszugleichen oder bei einem kompletten Versorgungsausfall andere an die Versorgungsleitung (3) angeschlossene Verbraucher mit Gas zu versorgen.

2. Verfahren nach Anspruch 1, wobei in der Gasverflüssigungsanlage (6) weniger als 5% der elektrischen Leistung der Kraftwerksanlage (1) zur Verflüssigung des Gases (5) genutzt wird.

3. Verfahren nach einem der vorgenannten Ansprüche, wobei im Normalbetriebszustand die Gasverflüssigungsanlage (6) dazu genutzt wird, um durch geregeltes Zu- oder Abschalten der Gasverflüssigungsanlage (6) eine Leistungsregelung der Kraftwerksanlage (1) insbesondere zur Frequenzregelung oder Frequenzstütze genutzt wird.

4. Verfahren nach einem der vorgenannten Ansprüche, wobei im Sonderbetriebszustand die bei Verdampfung im Verdampfer (8) freiwerdende Kälteenergie (9) zur Kühlung der Ansaugluft (10) der Gasturbine (2) verwendet wird.

## Claims

1. Method for operating a power plant (1), comprising a gas turbine (2) and an emergency fuel system (11), wherein
- in a normal operating state gas (5) is fed from a supply line (3) to the combustion process (4) of the gas turbine (2), and, in addition, gas (5) is fed from the supply line (3) to a gas liquefaction plant (6) and liquefied therein, wherein a liquefied gas (LNG) is formed and stored in a liquefied gas tank (7), and
- in a special operating state liquefied gas (LNG) is extracted from the liquefied gas tank (7), and evaporated in an evaporator (8), and in a gaseous state is fed into the combustion process (4) of the gas turbine (2),
**characterized in that**
in the special operating state evaporated gas is fed from the liquefied gas tank (7) back into the supply line (3) in order to compensate pressure fluctuations in the supply line or, in the event of a complete supply failure, to supply other consumers, which are connected to the supply line (3), with gas.

2. Method according to Claim 1, wherein in the gas liquefaction plant (6) less than 5% of the electric power of the power plant (1) is used for liquefaction of the gas (5).

3. Method according to one of the aforesaid claims, wherein the gas liquefaction plant (6) is additionally used in the normal operating state in order to utilize power control of the power plant (1) by controlled start-up or shutdown of said gas liquefaction plant (6), especially for frequency control or frequency back-up.

4. Method according to one of the aforesaid claims, wherein in the special operating state the cold energy (9) which becomes free during evaporation in the evaporator (8) is used for cooling the intake air (10) of the gas turbine (2).

## Revendications

1. Procédé pour faire fonctionner une centrale (1) électrique, comprenant une turbine (2) à gaz et un système (11) de combustible de secours, dans lequel
- dans un état de fonctionnement normal, on envoie du gaz d'un conduit (3) d'alimentation au processus (4) de combustion de la turbine (2) à gaz et, en outre, on envoie du gaz du conduit (3) d'alimentation à une installation (6) de liquéfaction du gaz et on l'y liquéfie, dans lequel on forme un gaz (LNG) liquéfié, que l'on accumule dans un réservoir (7) de gaz liquéfié, et
- dans un état de fonctionnement particulier, on prélève du gaz (LNG) liquéfié du réservoir (7) de gaz liquéfié et on l'évapore dans un évaporateur (8) et on l'envoie, à l'état gazeux, au processus (4) de combustion de la turbine (2) à gaz,
**caractérisé en ce que**,
dans l'état de fonctionnement particulier, on retourne du gaz sous forme de vapeur du réservoir (7) de gaz liquéfié au conduit (3) d'alimentation, pour compenser des fluctuations de pression dans le conduit d'alimentation ou, s'il y a une défaillance complète de l'alimentation, pour alimenter en gaz d'autres consommateurs raccordés au conduit (3) d'alimentation.

2. Procédé suivant la revendication 1, dans lequel, dans l'installation (6) de liquéfaction du gaz, on utilise moins de 5% de la puissance électrique de la centrale (1) électrique pour la liquéfaction du gaz (5).

3. Procédé suivant l'une des revendications précédentes, dans lequel, dans l'état de fonctionnement normal, on utilise l'installation (6) de liquéfaction des gaz, pour, par branchement ou débranchement régulé de l'installation (6) de liquéfaction des gaz, obtenir une régulation de la puissance de la centrale (1) électrique, notamment pour la régulation de fréquence ou l'assistance à la fréquence.

4. Procédé suivant l'une des revendications précédentes, dans lequel dans l'état de fonctionnement particulier, on utilise l'énergie (9) calorifique, libérée par l'évaporation dans l'évaporateur (8), pour refroidir l'air (10) d'aspiration de la turbine (2) à gaz.
